# EUROPÄISCHE PATENTSCHRIFT

(11) **EP 0 853 833 B1**
(45) Veröffentlichungstag und Bekanntmachung des Hinweises auf die Patenterteilung: **14.07.1999**
(21) Anmeldenummer: 96934502.4
(22) Anmeldetag: 30.09.1996
(51) Int. Cl.: H02B 1/30, H02B 1/01

(54) **RAHMENSCHENKEL FÜR EINEN SCHALTSCHRANK**
FRAME PIECE FOR A SWITCHGEAR CABINET
MONTANTS ET TRAVERSES DE CADRE POUR ARMOIRE DE DISTRIBUTION

(30) Priorität: 04.10.1995 DE 19536926
(43) Veröffentlichungstag der Anmeldung: 22.07.1998
(73) Patentinhaber: Rittal-Werk Rudolf Loh GmbH & Co. KG, 35745 Herborn (DE)
(72) Erfinder: BENNER, Rolf, D-35745 Herborn-Amdorf (DE); REUTER, Wolfgang, D-57299 Burbach (DE)
(74) Vertreter: Fleck, Hermann-Josef, Dr.-Ing.
(86) Internationale Anmeldenummer: EP9604277
(87) Internationale Veröffentlichungsnummer: WO9713305

(56) Entgegenhaltungen:
- DE-A- 4 227 532
- DE-A- 4 336 187
- DE-A- 4 336 204
- DE-U- 8 107 658
- DE-U- 8 138 352

## Beschreibung

Die Erfindung betrifft ein Rahmengestell aus Rahmenschenkeln für einen Schaltschrank, bei dem die Rahmenschenkel vorzugsweise spiegelbildlich zu ihrer Querschnittsdiagonalen ausgebildet sind und im Bereich der Innenseite des Rahmengestelles zwei mit Befestigungsaufnahmen versehene Aufnahmeabschnitte zum Anbringen von Montageschienen aufweisen, wobei diese Aufnahmeabschnitte parallel zu den zugeordneten Außenseiten des Rahmengestells ausgerichtet sind.

Ein Rahmengestell dieser Art ist durch die DE 43 36 204 A1 bekannt. Die Rahmenschenkel bilden mit wenigen Befestigungsaufnahmen und/oder Bohrungen nur ein Traggestell, das an beliebigen Stellen der Rahmenschenkel mit Montageschienen versehen werden kann, wobei die Montageschienen Befestigungsmöglichkeiten in vorgegebenem Systemraster in zwei senkrecht zueinander stehenden Richtungen bieten.

Die Aufnahmen für die Montageschienen werden durch zwei senkrecht zueinander stehende Aufnahmeabschnitte der Rahmenschenkel begrenzt, wobei vorzugsweise im wesentlichen als quadratischer Hohlprofilabschnitt augebildete Montageschienen verwendet werden, die mit Schraubverbindungen oder speziell ausgebildeten Verbindungselementen an den Aufnahmeabschnitten der Rahmenschenkel angebracht werden.

Es ist Aufgabe der Erfindung, ein Rahmengestell der eingangs erwähnten Art zu schaffen, bei dem auf einfache Weise unterschiedlich gestaltete Montageschienen positioniert in den Aufnahmen der Rahmenschenkel schnell und fest angebracht werden können.

Diese Aufgabe wird nach der Erfindung dadurch gelöst, daß die Aufnahmeabschnitte in einfach oder doppelt abgewinkelte Endabschnitte übergehen, die eine offene Schwalbenschwanznut oder eine geschlossene Schwalbenschwanznut zur Festlegung der mit entsprechenden Halteabschnitten versehenen Montageschienen bilden.

Mit der Schwalbenschwanznut und den Halteabschnitten der Montageschienen wird eine einfache Rastverbindung zwischen dem Rahmenschenkel und der Montageschiene geschaffen. Die Montageschiene wird einfach in die Aufnahme des Rahmenschenkels eingeklipst und dadurch fest am Rahmenschenkel gehalten.

Eine Positionierung der an den Rahmenschenkeln angebrachten Montageschienen wird dadurch auf einfache Weise erreicht, daß die Montageschienen mit einem Haltestift versehen sind, der in eine Befestigungsaufnahme der Aufnahmeabschnitte des Rahmenschenkels einführbar oder eingeführt ist.

Auf diese Weise können die Befestigungsaufnahmen und/oder Bohrungen der Montageschienen auf die Befestigungsbohrungen und/oder Bohrungen der Rahmenschenkel ausgerichtet werden. Dies wird allein durch die richtige Anordnung des Haltestiftes an der Montageschiene erreicht.

Nach einer Ausgestaltung ist vorgesehen, daß die Montageschienen Befestigungsschenkel aufweisen, die an den Aufnahmeabschnitten der Rahmenschenkel anliegen, daß diese Befestigungsschenkel in die Halteabschnitte auslaufen und daß die Endabschnitte mit dem ersten Teilabschnitt im stumpfen Winkel zu den Aufnahmeabschnitten stehen wie die Halteabschnitte an den Befestigungsschenkeln der Montageschienen. Damit wird ein satter Sitz mit großer Anlagefläche zwischen der Montageschiene und dem Rahmenschenkel erreicht.

Die Montageschienen können nach Ausgestaltungen so ausgelegt sein, daß die Montageschienen als offener Hohlprofilabschnitt mit im wesentlichen quadratischen Querschnitt ausgebildet sind, daß die Befestigungsschenkel in der Breite an die Breite der Aufnahmeabschnitte der Rahmenschenkel angepaßt sind und daß die aus der durch die Aufnahmeabschnitte begrenzten Aufnahme ragenden Profilseiten der Montageschienen mit Reihen von Befestigungsaufnahmen und/oder Bohrungen versehen sind oder daß die Montageschienen als offener Hohlprofilabschnitt ausgebildet sind, daß die Befestigungsschenkel in der Breite an die Breite der Aufnahmeabschnitte der Rahmenschenkel angepaßt sind, daß die Befestigungsschenkel außerhalb der durch die Aufnahmeabschnitte begrenzten Aufnahme in senkrecht dazu stehende Profilseiten übergehen und daß diese Profilseiten über einen im stumpfen Winkel anschließenden Verbindungsabschnitt, der mit einer Reihe von Befestigungsaufnahmen versehen ist, miteinander verbunden sind. Die Montageschiene bietet in jedem Fall außerhalb der Aufnahme des Rahmenschenkels ausreichend Befestigungsmöglichkeiten in dem Systemraster, das auch den Rahmenschenkeln zugrundegelegt werden kann.

Die Befestigungsmöglichkeiten lassen sich dadurch noch erhöhen, daß sich bei den Rahmenschenkeln den Endabschnitten abgekehrt an die Aufnahmeabschnitte zu den zugekehrten Außenseiten des Rahmengestelles senkrecht stehende und mit Befestigungsaufnahmen versehene Profilseiten anschließen, wobei bei aneinandergereihten Rahmengestellen Befestigungsflächen in gemeinsamen Ebenen eine einfache Durchmontage zwischen den Rahmengestellen zulassen.

Eine Ausgestaltung kann auch so vorgenommen sein, daß die Montageschiene U-förmigen Querschnitt aufweist, wobei in den Schenkeln Reihen von Befestigungsaufnahmen und/oder Bohrungen eingebracht sind, daß an die Stirnseiten der Montageschienen sich Befestigungslaschen mit Haltestift anschließen, wobei der Haltestift in eine Befestigungsaufnahme oder eine Befestigungsbohrung einführbar ist, und daß an der Stirnseite der Montageschiene Halteabschnitte angeformt sind, die in die Schwalbenschwanznut einrasten und den zugekehrten Endabschnitt derselben hintergreifen, wenn an dem Rahmenschenkel senkrecht stehende Montageschienen anzubringen sind, wobei wiederum eine Rastverbindung zwischen dem Rahmenschenkel und der Montageschiene verwendet ist.

Ist der Rahmenschenkel so ausgeführt, daß die Profilseiten der Rahmenschenkel über einen Verbindungsabschnitt miteinander verbunden sind und daß die zweiten Teilabschnitte der doppelt abgewinkelten Endabschnitte der Aufnahmeabschnitte an dem Verbindungsabschnitt anliegen und fest mit diesem verbunden sind, dann erhält er eine ausgezeichnete Stabilität, insbesondere Verwindungsteifigkeit.

Die Erfindung wird anhand von in den Zeichnungen dargestellten Ausführungsbeispielen näher erläutert. Es zeigen:
Fig. 1 im Querschnitt einen Rahmenschenkel mit zwei Dichtungsstegen und einer offenen Schwalbenschwanznut,
Fig. 2 im Querschnitt einen Rahmenschenkel mit zwei Anlagestegen und einer geschlossenen Schwalbenschwanznut,
Fig. 3 schematisch das Anbringen einer im Querschnitt im wesentlichen quadratischen und als offener Hohlprofilabschnitt ausgebildeten Montageschiene an dem Rahmenschenkel,
Fig. 4 schematisch das Anbringen einer im wesentlichen U-förmigen Montageschiene an den Rahmenschenkel,
Fig. 5 eine Teilansicht eines Rahmenschenkels mit einer angebrachten Montageschiene nach Fig. 3 und
Fig. 6 schematisch das Anbringen einer senkrecht zum Rahmenschenkel stehenden Montageschiene.

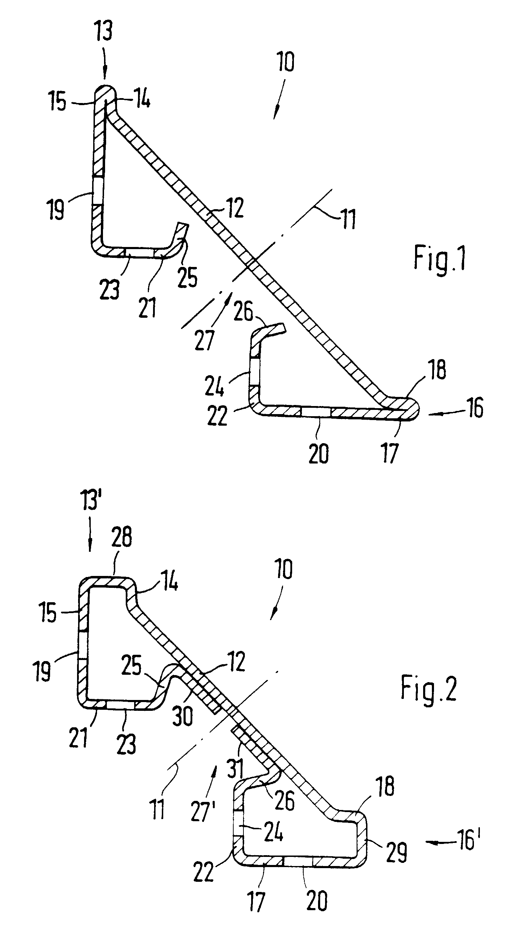

Die Rahmenschenkel 10 sind vorzugsweise spiegelbildlich zur Querschnittsdiagonale 11 ausgebildet, so daß sie für jeden Schenkel des Rahmengestelles verwendbar sind. Die Ausrichtung im Rahmengestell ist stets so, daß sie zur Innenseite des Rahmengestelles hin eine zur Querschnittsdiagonale 11 vorzugsweise symmetrische Aufnahme für Montageschienen bilden. Bei dem Ausführungsbeispiel nach Fig. 1 bildet ein Verbindungsabschnitt 12 zur Außenkante hin eine dreieckförmige Aufnahme für die Abkantungen der Wandelemente und auch für die Scharnier- und Schließelemente der Schranktür. Der Verbindungsabschnitt 12 geht über Dichtungsstege 13 und 16 in mit Reihen von Befestigungsaufnahmen 19 und 20 und/oder Bohrungen versehene Profilseiten 15 und 17 über. Die Profilseiten 15 und 17 sind senkrecht zu den zugekehrten Außenseiten des Rahmengestelles ausgerichtet. Die Dichtungsstege 13 und 16 werden durch einen Stegabschnitt 14 und 18 und einen Teil der Profilseiten 15 und 17 doppellagig ausgeführt, wobei die Stegabschnitte 14 und 18 senkrecht zu den Außenseiten des Rahmengestelles abstehen und über den Verbindungsabschnitt 12 vorstehen. Die Stegabschnitte 14 und 18 gehen abgerundet in die Profilseiten 15 und 17 über. Sind die Wandelemente mit Abkantungen und Dichtungselementen versehen, dann können sie dicht am Rahmengestell angebracht werden.

Die den Dichtungsstegen 13 und 16 abgekehrten Kanten der Profilseiten 15 und 17 gehen in Aufnahmeabschnitte 21 und 22 über, die ebenfalls mit Befestigungsaufnahmen 23 und 24 und/oder Bohrungen im Systemraster versehen sind. Es können aber auch nur wenige Befestigungsaufnahmen 23 und 24 und/oder Bohrungen in die Aufnahmeabschnitte 21 und 22 eingebracht sein. Die Aufnahmeabschnitte 21 und 22 laufen in einfach abgekantete Endabschnitte 25 und 26 aus, die im stumpfen Winkel zu den Aufnahmeabschnitten 21 und 22 stehen und im Anschluß an die durch die Aufnahmeabschnitte 21 und 22 begrenzte Aufnahme eine offene Schwalbenschwanznut 27 bilden.

Wie Fig. 2 zeigt, können anstelle der Dichtungsstege 13 und 16 an den Verbindungsabschnitt 12 auch Anlagestege ausgeformt werden, wobei die Stegabschnitte 14 und 18 über Anlageabschnitte 28 und 29 mit den Profilseiten 15 und 17 verbunden sind. Die Anlageabschnitte 28 und 29 verlaufen parallel zu den zugekehrten Außenseiten des Rahmengestelles und damit auch zu den daran angebrachten Wandelementen.

Die Endabschnitte der Aufnahmeabschnitte 21 und 22 sind doppelt abgekantet, wie mit den Bezugszeichen 25 und 30 bzw. 26 und 31 gezeigt ist. Die doppelt abgekanteten Endabschnitte bilden im Anschluß an die durch die Aufnahmeabschnitte 21 und 22 gebildete Aufnahme eine geschlossene Schwalbenschwanznut 27'. Die zweiten mit 30 und 31 bezeichneten Teilabschnitte sind gegeneinander gerichtet und liegen an der Innenseite des Verbindungsabschnittes 12 an. Zur Erhöhung der Stabilität sind die mit 30 und 31 bezeichneten Teilabschnitte der doppelt abgewinkelten Endabschnitte fest mit dem Verbindungsabschnitt 12 verbunden.

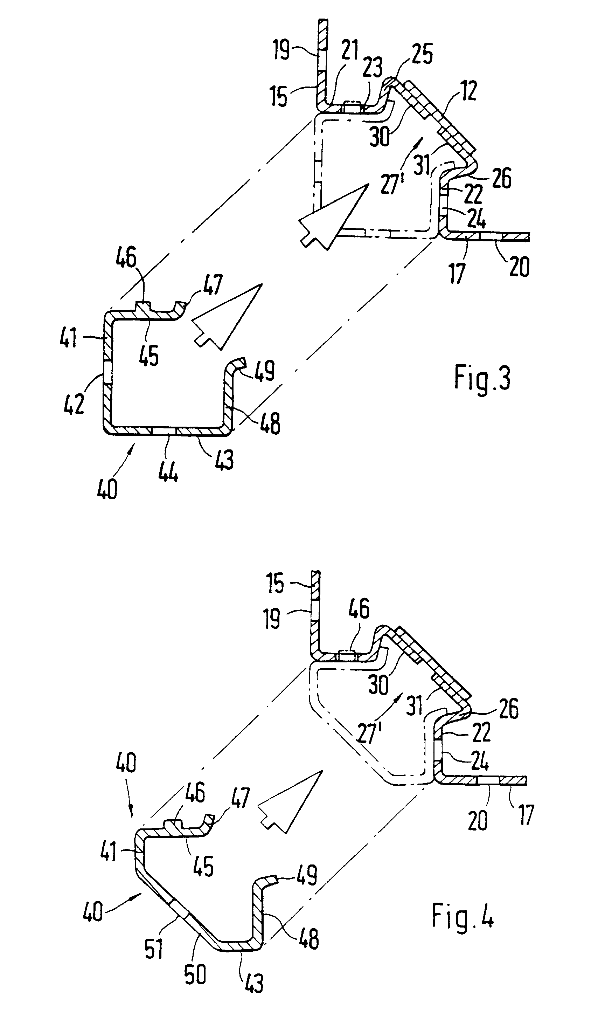

Wie die Fig. 3 erkennen läßt, kann eine im wesentlichen als quadratischer offener Hohlprofilabschnitt ausgebildete Montageschiene 40 in die Aufnahme der Aufnahmeabschnitte 21 und 22 eingeführt und in die Schwalbenschwanznut 27' eingeklipst werden. Dazu laufen die Befestigungsschenkel 45 und 48 der Montageschiene 40 in Halteabschnitte 47 und 49 aus, die ebenfalls im stumpfen Winkel zu den Befestigungsschenkeln 45 und 48 stehen wie die ersten Teilabschnitte 25 und 26 der Endabschnitte der Aufnahmeabschnitte 21 und 22. Die außerhalb der Aufnahme liegenden Schenkel 41 und 43 der Montageschiene 40 schließen bündig mit den Profilseiten 15 und 17 des Rahmenschenkels 10 ab, sobald die Montageschiene 40 rastend mit dem Rahmenschenkel 10 verbunden ist. Die Schenkel 41 und 43 der Montageschiene 40 sind mit Reihen von Befestigungsaufnahmen 42 und 44 und/oder Bohrungen 52 und 53 im Systemraster versehen und bieten Befestigungsmöglichkeiten in zwei Richtungen.

An einem Befestigungsschenkel, z.B. 45, ist ein Haltestift 46 angeformt, der in eine Befestigungsaufnahme 23 oder 24 des Aufnahmeabschnittes 21 oder 22 eingeführt wird. Auf diese Weise wird die Montageschiene 40 am Rahmenschenkel 10 ausgerichtet und positioniert.

Wie Fig. 4 zeigt, kann der Querschnitt der Montageschiene 40 auch anders ein. Die Profilseiten 41 und 43 sind sehr schmal und werden durch einen Verbindungsabschnitt 50 miteinander verbunden, der vorzugsweise parallel zum Verbindungsabschnitt 12 des Rahmenschenkels 10 verläuft und mit einer Reihe von Befestigungsaufnahmen 51 und/oder Bohrungen im Systemraster versehen ist. Auch diese offene Montageschiene 40 hat mit den Befestigungsschenkeln 45 und 48 soviel Elastizität, daß die Halteabschnitte 47 und 49 in die geschlossene Schwalbenschwanznut 27' eingerastet werden kann.

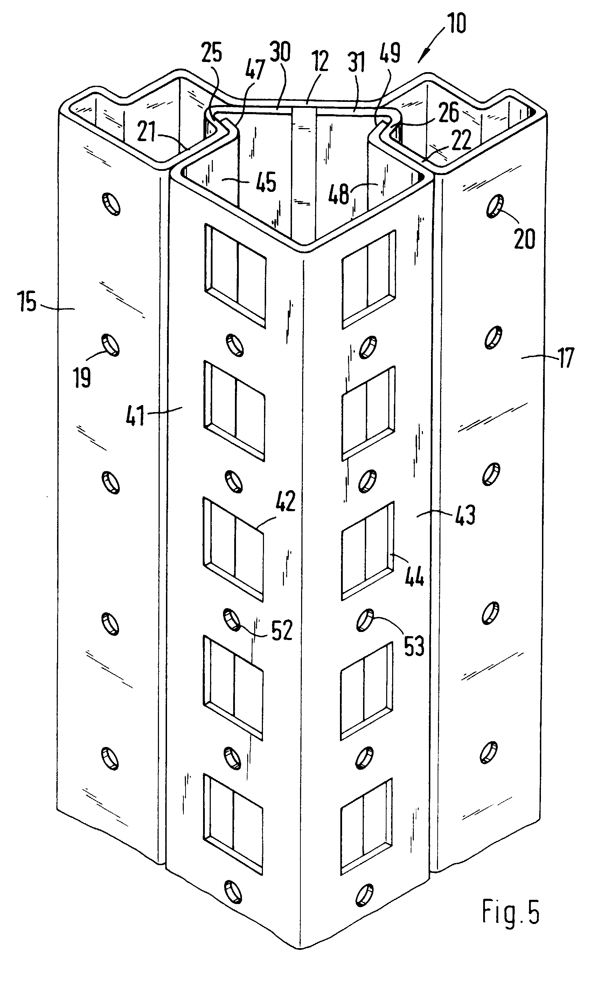

Fig. 5 läßt einen Teilabschnitt eines Rahmenschenkels 10 erkennen, bei dem in die Aufnahme und die Schwalbenschwanznut eine Montageschiene 40 nach Fig. 3 eingerastet ist. Dabei liegen die Befestigungsschenkel 45 und 48 der Montageschiene 40 satt an den Aufnahmeabschnitten 21 und 22 des Rahmenschenkels 10 an. Die Halteabschnitte 47 und 49 hintergreifen anliegend die ersten Teilabschnitte 25 und 26 der doppelt abgewinkelten Endabschnitte des Rahmenschenkels 10 und stellen einen ausgezeichneten Halt der Montageschiene 40 am Rahmenschenkel 10 her.

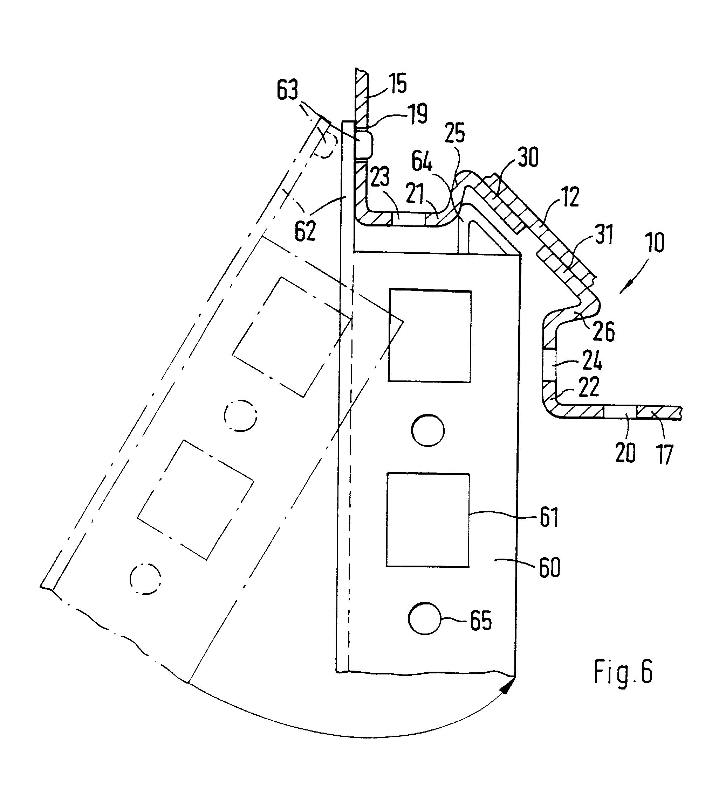

Schließlich zeigt die Fig. 6, wie eine Montageschiene 60 senkrecht am Rahmenschenkel 10 abstehend angebracht werden kann. Im Ausführungsbeispiel ist die Montageschiene 60 U-förmig und trägt in ihren Schenkeln im Systemraster Reihen von Befestigungsaufnahmen 61 und/oder Bohrungen 65. An den Stirnseiten der Montageschiene 60 sind Befestigungslaschen 62 mit einem Haltestift 63 angeformt. Der Haltestift 63 wird in eine Befestigungsaufnahme 19 oder Bohrung in der Profilseite 15 des Rahmenschenkels 10 eingeführt und durch Einschwenken mit einem Halteabschnitt 64 hinter dem ersten Teilabschnitt 25 der Schwalbenschwanznut 27' verrastet. Der Halteabschnitt 64 ist an der Stirnseite der Montageschiene 60 angeformt. Die Montageschiene 60 steht dann in Verlängerung der Profilseite 15 am Rahmenschenkel 10 in Richtung Schrankinnenraum ab und steht parallel zu der Außenseite des Rahmengestelles, die der Profilseite 17 zugekehrt ist.

In gleicher Weise kann die Montageschiene 60 auch an der Profilseite 17 angebracht werden, wobei der Halteabschnitt 64 hinter den ersten Teilabschnitt 26 des doppelt abgewinkelten Endabschnimes des Aufnahmeabschnittes 22 einrastet. Der Haltestift 63 übernimmt wieder die Positionierung der Montageschiene 60, so daß deren Befestigungsaufnahmen 61 und/oder Bohrungen 65 auf die Befestigungaufnahmen 19 und 20 der Profilseiten 15 und 17 und der Befestigungsaufnahmen 23 und 24 der Aufnahmeabschnitte 21 und 22 der Rahmenschenkel 10 ausgerichtet sind.

## Patentansprüche

1. Rahmengestell aus Rahmenschenkeln (10) für einen Schaltschrank, bei dem die Rahmenschenkel (10) vorzugsweise spiegelbildlich zu ihrer Querschnittsdiagonalen (11) ausgebildet sind und im Bereich der Innenseite des Rahmengestelles zwei mit Befestigungsaufnahmen (23, 24) und/oder Bohrungen versehene Aufnahmeabschnitte (21,22) zum Anbringen von Montageschienen (40) aufweisen, wobei diese Aufnahmeabschnitte (21, 22) parallel zu den zugeordneten Außenseiten des Rahmengestells ausgerichtet sind,
dadurch gekennzeichnet,
daß die Aufnahmeabschnitte (21,22) in einfach oder doppelt abgewinkelte Endabschnitte (25,26 bzw. 25,30; 26,31) übergehen, die eine offene Schwalbenschwanznut (27) oder eine geschlossene Schwalbenschwanznut (27') zur Festlegung der mit entsprechenden Halteabschnitten (47,49,64) versehenen Montageschienen (40,60) bilden.

2. Rahmengestell nach Anspruch 1,
dadurch gekennzeichnet,
daß die Montageschienen (40) mit einem Haltestift (46) versehen sind, derin eine Befestigungsaufnahme (23 bzw. 24) der Aufnahmeabschnitte (21,22) des Rahmenschenkels (10) einführbar oder eingeführt ist.

3. Rahmengestell nach Anspruch 1 oder 2,
dadurch gekennzeichnet,
daß die Montageschienen (40) Befestigungsschenkel (45,48) aufweisen, die an den Aufnahmeabschnitten (21,22) der Rahmenschenkel (10) anliegen,
daß diese Befestigungsschenkel (45,48) in die Halteabschnitte (47,49) auslaufen und
daß die Endabschnitte mit dem ersten Teilabschnitt (25,26) im stumpfen Winkel zu den Aufnahmeabschnitten (21,22) stehen, wie die Halteabschnitte (47,49) an den Befestigungsschenkeln (45,48) der Montageschienen (40).

4. Rahmengestell nach einem der Ansprüche 1 bis 3,
dadurch gekennzeichnet,
daß die Montageschienen (40) als offener Hohlprofilabschnitt mit im wesentlichen quadratischen Querschnitt ausgebildet sind,
daß die Befestigungsschenkel (45,48) in der Breite an die Breite der Aufnahmeabschnitte (21,22) der Rahmenschenkel (10) angepaßt sind und
daß die aus der durch die Aufnahmeabschnitte (21,22) begrenzten Aufnahme ragenden Profilseiten (41,43) der Montageschienen (40) mit Reihen von Befestigungsaufnahmen (42,44) und/oder Bohrungen (52,53) versehen sind (Fig.3).

5. Rahmengestell nach einem der Ansprüche 1 bis 3,
dadurch gekennzeichnet,
daß die Montageschienen (40) als offener Hohlprofilabschnitt ausgebildet sind,
daß die Befestigungsschenkel (45,48) in der Breite an die Breite der Aufnahmeabschnitte (21,22) der Rahmenschenkel (10) angepaßt sind,
daß die Befestigungsschenkel (45,48) außerhalb der durch die Aufnahmeabschnitte (21,22) begrenzten Aufnahme in senkrecht dazu stehende Profilseiten (41,43) übergehen und
daß diese Profilseiten über einen im stumpfen Winkel anschließenden Verbindungsabschnitt (50), der mit einer Reihe von Befestigungsaufnahmen (51) versehen ist, miteinander verbunden sind (Fig. 4).

6. Rahmengestell nach Anspruch 4 oder 5,
dadurch gekennzeichnet,
daß sich bei den Rahmenschenkeln (10) den Endabschnitten (25,26; 25,30; 26,31) abgekehrt an die Aufnahmeabschnitte (21,22) zu den zugekehrten Außenseiten des Rahmengestelles senkrecht stehende und mit Befestigungsaufnahmen (19,20) versehene Profilseiten (15,17) anschließen.

7. Rahmenschenkel nach einem der Ansprüche 1 bis 6,
dadurch gekennzeichnet,
daß die Montageschiene (60) U-förmigen Querschnitt aufweist, wobei in den Schenkeln Reihen von Befestigungsaufnahmen (61) und/oder Bohrungen (65) eingebracht sind,
daß an die Stirnseiten der Montageschienen (60) sich Befestigungslaschen (62) mit Haltestift (63) anschließen, wobei der Haltestift (63) in eine Befestigungsaufnahme (19) oder eine Befestigungsbohrung einführbar ist, und
daß an der Stirnseite der Montageschiene (60) Halteabschnitte (64) angeformt sind, die in die Schwalbenschwanznut (27,27') einrasten und den zugekehrten Endabschnitt (25) derselben hintergreifen.

8. Rahmengestell nach Anspruch 6 oder 7,
dadurch gekennzeichnet,
daß die Profilseiten (15,17) der Rahmenschenkel (10) über einen Verbindungsabschnitt (12) miteinander verbunden sind und
daß die zweiten Teilabschnitte der doppelt abgewinkelten Endabschnitte (25,30; 26,31) der Aufnahmeabschnitte (21,22) an dem Verbindungsabschnitt (12) anliegen und fest mit diesem verbunden sind.

## Claims

1. Framework, comprising frame members (10) for a switchgear cabinet, wherein the frame members (10) are preferably provided in a mirror-image manner relative to their cross-sectional diagonal (11) and have two receiving portions (21,22), which are provided with securing receivers (23,24) and/or bores, in the region of the inner surface of the framework for the mounting of mounting rails (40), these receiving portions (21,22) being orientated parallel to the associated outer surfaces of the framework, characterised in that the receiving portions (21,22) extend into singly or doubly bent-over end portions (25,26 or respectively 25;30; 26;31), which form an open dovetail groove (27) or a closed dovetail groove (27') for the securement of the mounting rails (40,60), which are provided with corresponding retaining portions (47,49,64).

2. Framework according to claim 1, characterised in that the mounting rails (40) are provided with a retaining pin (46), which is insertable or inserted in a securing receiver (23 or 24 respectively) in the receiving portions (21,22) of the frame member (10).

3. Framework according to claim 1 or 2, characterised in that the mounting rails (40) have securing arms (45,48) which abut against the receiving portions (21,22) of the frame members (10), in that these securing arms (45,48) extend into the retaining portions (47,49), and in that the end portions lie with the first part (25,26) at an obtuse angle relative to the receiving portions (21,22), like the retaining portions (47,49) on the securing arms (45,48) of the mounting rails (40).

4. Framework according to one of claims 1 to 3, characterised in that the mounting rails (40) are configured as an open hollow profiled section having a substantially square cross-section, in that the width of the securing arms (45,48) is adapted to the width of the receiving portions (21,22) of the frame members (10), and in that the profile sides (41,43) of the mounting rails (40), which sides protrude from the receiving means defined by the receiving portions (21,22), are provided with rows of securing receivers (42,44) and/or bores (52,53) (Fig. 3).

5. Framework according to one of claims 1 to 3, characterised in that the mounting rails (40) are configured as an open hollow profiled section, in that the width of the securing arms (45,48) is adapted to the width of the receiving portions (21,22) of the frame members (10), in that the securing arms (45,48) extend into profile sides (41,43), which extend perpendicularly relative to the receiver externally of said receiver which is defined by the receiving portions (21,22), and in that these profile sides are interconnected via a connecting portion (50), which communicates at an obtuse angle and is provided with a row of securing receivers (51) (Fig. 4).

6. Framework according to claim 4 or 5, characterised in that, in the case of the frame members (10) remote from the end portions (25,26; 25;30; 26;31), profile sides (15,17) communicate with the receiving portions (21,22), said profile sides extending perpendicularly relative to the facing outer surfaces of the framework and being provided with securing receivers (19,20).

7. Frame member according to one of claims 1 to 6, characterised in that the mounting rail (60) has a U-shaped cross-section, rows of securing receivers (61) and/or bores (65) being provided in the members, in that securing lugs (62), with retaining pin (63), commun.icate with the end faces of the mounting rails (60), the retaining pin (63) being insertable in a securing receiver (19) or a securing bore, and in that retaining portions (64) are formed on the end face of the mounting rail (60), said retaining portions locking in the dovetail groove (27,27') and engaging behind the facing end portion (25) thereof.

8. Framework according to claim 6 or 7, characterised in that the profile sides (15,17) of the frame members (10) are interconnected via a connecting portion (12), and in that the second parts of the doubly bent-over end portions (25,30; 26,31) of the receiver portions (21,22) abut against the connecting portion (12) and are securedly connected thereto.

## Revendications

1. Ossature composée de montants et traverses (10) pour une armoire de distribution, dans laquelle les montants et traverses (10) sont de préférence de forme énantiomorphe par rapport à la diagonale (11) de leur section transversale et présentent, dans la zone de la face intérieure de l'ossature, deux ailes de réception (21, 22) pourvues de logements de fixation (23, 24) et/ou de forures (21, 22), aux fins de la fixation de rails de montage (40), où ces ailes de réception (21, 22) sont orientées parallèlement aux faces extérieures associées de l'ossature,
caractérisée
en ce que les ailes de réception (21, 22) se terminent par des ailes terminales à cintrage simple (25, 26) ou à cintrage double (25, 30; 26, 31), qui constituent une rainure de queue d'aronde ouverte (27) ou une rainure de queue d'aronde fermée (27') pour la fixation des rails de montage (40, 60) dotés d'ailes de support (47, 49, 64) correspondantes.

2. Ossature suivant la revendication 1,
caractérisée
en ce que les rails de montage (40) sont dotés d'une cheville de fixation (46), qui peut être ou qui est introduite dans un logement de fixation (23 ou 24) des ailes de réception (21, 22) du montant ou de la traverse (10).

3. Ossature suivant la revendication 1 ou 2,
caractérisée
en ce que les rails de montage (40) présentent des ailes de fixation (45, 48) qui s'appliquent sur les ailes de réception (21, 22) des montants ou traverses (10),
en ce que ces ailes de fixation (45, 48) se terminent par les ailes de support (47, 49), et
en ce que les ailes terminales (25, 26) sont disposées suivant un angle obtus par rapport aux ailes de réception (21, 22), tout comme les ailes de support (47, 49) par rapport aux ailes de fixation (45, 48) des rails de montage (40).

4. Ossature suivant l'une quelconque des revendications de 1 à 3,
caractérisée
en ce que les rails de montage (40) ont la forme de tronçons de profilé creux ouvert à section transversale en substance quadrangulaire,
en ce que la largeur des ailes de fixation (45, 48) est adaptée à la largeur des ailes de réception (21, 22) des montants et traverses (10) et en ce que les ailes (41, 43) des rails de montage (40) qui butent contre les ailes de réception (21, 22) présentent des rangées de logements de fixation (42, 44) et/ou de forures (52, 53).

5. Ossature suivant l'une quelconque des revendications de 1 à 4,
caractérisée
en ce que les rails de montage (40) sont constitués par des profilés creux ouverts,
en ce que la largeur des ailes de fixation (45, 48) est adaptée à la largeur des ailes de réception (21, 22) des montants et traverses (10),
en ce qu'en dehors de leur portion appliquée sur les ailes de réception (21, 22), les ailes de fixation (45, 48) se prolongent par des ailes de profilé (41, 43) qui leur sont perpendiculaires, et
en ce que ces ailes de profilé sont reliées l'une à l'autre par l'intermédiaire d'une aile de liaison (50) qui s'y raccorde suivant un angle obtus, aile de liaison (50) qui présente une série de logements de fixation (51).

6. Ossature suivant la revendication 4 ou 5,
caractérisée
en ce que vis-à-vis des ailes terminales (25, 26; 25, 30) des montants et traverses (10) sont raccordées aux ailes de réception (21, 22) des ailes de profilé (15, 17) perpendiculaires aux faces extérieures de l'ossature, ailes de profilé (15, 17) qui présentent des logements de fixation (19, 20).

7. Ossature suivant l'une quelconque des revendications de 1 à 6,
caractérisée
en ce que le rail de montage (60) présente une section transversale en forme de U, les ailes de ce rail présentant des rangées de logements de fixation (61) et/ou de forures (65),
en ce qu'aux faces frontales des rails de montage (60) se raccordent des pattes de fixation (62) avec une cheville de fixation (63), cette dernière pouvant être introduite dans un logement de fixation (19) ou dans une forure de fixation, et
en ce que sur la face frontale du rail de montage (60) sont formées des ailes de support (64) qui s'encliquettent dans la rainure de queue d'aronde (27, 27') et qui viennent s'engager derrière l'aile terminale (25) correspondante de cette dernière.

8. Ossature suivant la revendication 6 ou 7,
caractérisée
en ce que les ailes de profilé (15, 17) des montants et traverses (10) sont reliées l'une à l'autre par l'intermédiaire d'une aile de liaison (12), et
en ce que les deuxièmes ailes partielles des ailes terminales à cintrage double (25, 30; 26, 31) des ailes de réception (21, 22) s'appliquent sur l'aile de liaison (12) et sont solidarisées avec cette dernière.
